# EUROPÄISCHE PATENTSCHRIFT

(11) **EP 2 456 648 B1**
(45) Veröffentlichungstag und Bekanntmachung des Hinweises auf die Patenterteilung: **27.03.2013**
(21) Anmeldenummer: 10721490.0
(22) Anmeldetag: 21.05.2010
(51) Int. Cl.: B60W 30/06, B62D 15/02

(54) **VORRICHTUNG UND VERFAHREN ZUM UNTERSTÜTZTEN EINPARKEN EINES FAHRZEUGS**
APPARATUS AND METHOD FOR THE ASSISTED PARKING OF A VEHICLE
DISPOSITIF ET PROCÉDÉ D'AIDE AU STATIONNEMENT D'UN VÉHICULE

(30) Priorität: 20.07.2009 DE 102009027820
(43) Veröffentlichungstag der Anmeldung: 30.05.2012
(73) Patentinhaber: Robert Bosch GmbH, 70442 Stuttgart (DE)
(72) Erfinder: SCHNEIDER, Bettina, 71642 Ludwigsburg (DE); SCHNEIDER, Marcus, 71642 Ludwigsburg (DE)
(86) Internationale Anmeldenummer: PCT/EP2010/057055
(87) Internationale Veröffentlichungsnummer: WO 2011/009653

(56) Entgegenhaltungen:
- WO-A1-2008/055567
- DE-A1- 10 113 323
- DE-A1- 10 220 837
- DE-A1-102005 032 095

## Beschreibung

Die vorliegende Erfindung betrifft eine Vorrichtung und ein Verfahren zum unterstützten Einparken eines Fahrzeugs, insbesondere eines Kraftfahrzeugs, in eine quer zum Fahrzeug vorhandene Parklücke, mit wenigstens einer Sensoreinrichtung, die zumindest zur Erkennung eines Eckbereichs eines die Parklücke begrenzenden Hindernisses ausgebildet ist.

Vorrichtungen zum unterstützten Einparken eines Fahrzeugs sind bereits als semiautonome Einparksysteme bekannt, die das Einparken in Querparklücken unterstützen. Derartige semiautonome Einparksysteme führen das Fahrzeug auf einer berechneten Bewegungsbahn. Die Führung des Fahrzeugs kann durch optische Signale, durch akustische Signale oder durch einen aktiven Eingriff in die Führung des Fahrzeugs erfolgen, beispielsweise durch eine wenigstens hilfsweise unterstützte Lenksteuerung. Um die Informationen zur Steuerung des Fahrzeugs durch das semiautonome Einparksystem zu erhalten, ist zunächst eine vollständige Vermessung der Parklücke durch das Einparksystem erforderlich. Hierfür führt der Fahrer das Fahrzeug zunächst vollständig an der Parklücke vorbei, so dass das Einparksystem die Parklücke vermessen kann. Das Vorbeiführen des Fahrzeugs erfolgt dabei durch eine Vorwärtsbewegung. Bei Einlegen des Rückwärtsgangs kann das Einparksystem aktiviert werden, um das Kraftfahrzeug mit entsprechender Unterstützung in die Parklücke zu führen.

Aus der DE 10 2005 037 468 A1 ist eine Vorrichtung zur Unterstützung eines Einparkvorgangs eines Fahrzeugs in eine quer zum Fahrzeug vorhandene Parklücke bekannt. Die Vorrichtung weist eine Parklückenvermessungseinrichtung auf, so dass der Fahrer das Kraftfahrzeug an der Querparklücke vorbeiführen muss, um über eine Sensoranordnung die Querparklücke mit der Parklückenvermessungseinrichtung zu vermessen. Nach vollständiger Vermessung der Parklücke ist das Kraftfahrzeug durch den Fahrer bereits an der Parklücke vorbeigeführt worden. Aufgrund dieses Erfordernisses kann von weiteren Verkehrsteilnehmern angenommen werden, dass der Fahrer des Fahrzeugs die Parklücke freigibt bzw. diese nicht zu belegen wünscht. Ferner ergibt sich der Nachteil, dass die sich durch das Vorbeiführen des Fahrzeugs an der Parklücke ergebende Startposition zur Aktivierung des semiautonomen Einparksystems nicht vorteilhaft ist, so dass häufig komplexe Rangierzüge ausgeführt werden müssen, um das Fahrzeug in die Querparklücke zu bewegen.

Des Weiteren haben herkömmliche Vorrichtungen zum unterstützten Einparken in Querparklücken den Nachteil, dass mit diesen nur ein Rückwärtseinparken unterstützt wird. Dies ist jedoch insbesondere in Parkhäusern wegen der Verschmutzung durch Abgase oft nicht erlaubt.

Weiterhin ist ein System zum unterstützten Einparken in Querparklücken bekannt, bei denen das Fahrzeug vor dem eigentlichen Einparkvorgang nicht vollständig an der Parklücke vorbeibewegt wird, um diese zu vermessen. Bei diesem System wird die Parklücke jedoch überhaupt nicht vermessen, sondern der Fahrer muss dem System mitteilen, wo sich die Parklücke relativ zum Fahrzeug befindet. Dies hat den Nachteil geringen Komforts und geringer Genauigkeit.

Weiterhin ist aus der DE 101 13 323 A1 eine Radarsensorplattform bekannt, mittels der bei einem Einparken eines Fahrzeugs in Abhängigkeit von der Messung der entsprechenden Breite einer Parklücke ein Signal ausgegeben wird.

Es ist daher die Aufgabe der vorliegenden Erfindung, eine Vorrichtung und ein Verfahren zum unterstützten Einparken eines Fahrzeugs vorzuschlagen, durch die die Nachteile des vorstehend genannten Standes der Technik überwunden werden und durch die das unterstützte Einparken eines Kraftfahrzeugs in eine Querparklücke weiter verbessert wird.

Diese Aufgabe wird mit den Merkmalen de Ansprüche 1 und 7 gelost. Vorteilhafte Weiterbildungen der Erfindung sind in den abhängigen Ansprüchen angegeben.

Die Begriffe "vor", "hinter", "links" und "rechts" sind bei der Beschreibung der Erfindung stets auf eine gewöhnliche Ausrichtung eines Fahrzeugs bezogen.

Dies ermöglicht, dass die Sensoreinrichtung ein erstes, die Parklücke begrenzenden Hindernis vermessen kann, ohne dass das Fahrzeug an der Parklücke vorbeifahren muss. Insbesondere kann bereits in einer Startposition des Fahrzeugs, von der unmittelbar aus ein Vorwärtseinparken in die Parklücke vorgenommen werden soll, oder sogar noch vor Erreichen einer solchen Startposition, eine Vermessung des ersten Hindernisses vorgenommen werden. Unter "im Wesentlichen vor dem Fahrzeug" wird im Rahmen der Erfindung nicht nur eine Lage geradeaus vor dem Fahrzeug mit einem Winkel von 0° gegenüber einer Längsachse des Fahrzeugs verstanden, sondern schließt auch einen seitlich verkippten oder aufgeweiteten Winkelbereich mit ein, der links und/oder rechts schräg vor dem Fahrzeug Bereiche beispielsweise bis zu einem Winkel von 30 oder 45 ° oder sogar bis zu 60 ° gegenüber der Längsachse umfasst.

Erfindungsgemäß ist die Vorrichtung so ausgebildet, dass die Erkennung der Parklücke lediglich durch eine Sensierung eines ersten Eckbereichs des ersten Hindernisses, das der Parklücke zugewandt ist, durch die Sensoreinrichtung durchführbar ist. Dieser Eckbereich stellt von der Startposition des Fahrzeugs gesehen den am nächsten liegenden Teil des ersten Hindernisses dar, so dass es von Vorteil ist, dass diese Ecke zur Vermeidung einer Kollision beim Einparken in einer zeitlichen Abfolge des Einparkvorgangs als erstes von der Sensoreinrichtung vermessen wird. Dieser Eckbereich liegt bezüglich einer kreissegmentartigen Einparkbahn außerhalb eines zugehörigen gedachten Kreises und kann daher während eines Annähems des Fahrzeugs an die Parklücke bzw. beim Hineinbewegen in die Parklücke von der Sensorvorrichtung, die durch ihre Ausrichtung nach vorne tangential zu der Einparkbahn ausgerichtet ist, "überstrichen" werden. Somit kann die Sensorvorrichtung ohne selbst bewegt werden zu müssen allein durch eine Kurvenbewegung des Fahrzeugs die erste Ecke überstreichen und wird dabei vermessen bzw. sensiert.

Vorteilhafterweise ist die Vorrichtung beispielsweise mittels einer Bestimmungseinrichtung zur Festlegung einer Soll-Einparkbewegungsbahn dazu ausgebildet, eine Breite der Parklücke als gegeben anzunehmen, ohne diese zu vermessen. Dies hat den Vorteil, dass der Bestimmungsvorrichtung bereits durch Vermessen der ersten Ecke des ersten Hindernisses genügend Daten vorliegen,damit durch die Bestimmungsvorrichtung eine Soll-Einparkbewegungsbahn festgelegt werden kann.

Die Bestimmungsvorrichtung ist vorteilhafterweise dazu ausgebildet, die Soll-Einparkbewegungsbahn neu zu berechnen. Dies erlaubt der Vorrichtung, eine tatsächliche Breite der Parklücke zu vermessen und/oder zu berechnen, wenn im Laufe eines Einparkvorgangs an die Bestimmungsvorrichtung weitere Informationen geliefert werden.

Vorteilhafterweise ist zumindest eine weitere Sensoreinrichtung vorgesehen, die so ausgebildet ist, dass sie einen seitlichen Abstand des Fahrzeugs zu einem Hindernis vermessen kann. Somit kann während eines Einfahrens des Fahrzeugs in die Parklücke ein zweiter Eckbereich eines zweiten, die Parklücke begrenzenden Hindernisses, die der Parklücke zugewandt ist, sowie die tatsächliche Breite der Parklücke vermessen werden. Der zweite Eckbereich liegt dabei bezüglich der kreissegmentartigen Einparkbahn innerhalb des gedachten Kreises. Bevorzugt weist die weitere Sensoreinrichtung auf jeder Längsseite des Fahrzeugs zumindest einen Sensor auf, beispielsweise jeweils vorne und hinten einen Sensor. Dies kann ein Sensor einer herkömmlichen Einparksensorik sein.

Als Führungsmittel zum Führen des Fahrzeugs auf der Soll-Einparkbewegungsbahn sind HMI-Kommandos (Human-machine-interface), also akustische und/oder optische Signale an einen Fahrer des Fahrzeugs möglich. Vorteilhaft ist auch eine direkte Ansteuerung einer Lenkvorrichtung des Fahrzeugs beispielsweise mittels CAN-Kommandos oder über EPS (electric power steering). Möglich ist auch, dass auch Bremsvorgänge während des Parkens mit ähnlichen Führungsmitteln geführt werden.

Vorteilhafterweise ist die Vorrichtung so ausgebildet, dass sie beispielsweise mittels einer Transformationseinrichtung relative Distanzwerte und/oder Winkelmesswerte der Hindernisse bezogen auf das Fahrzeug in Beziehung zur Fahrzeugausrichtung zu einem jeweiligen Zeitpunkt auf der Bewegungsbahn und/oder zur Fahrzeugposition zu einem jeweiligen Zeitpunkt auf der Bewegungsbahn setzen kann. Diese Beziehungen werden von der Vorrichtung in einen absoluten x-y-Raum transferiert. Somit lassen sich tatsächliche absolute Positionen und Winkel von Ecken und Begrenzungsflächen der Hindernisse bestimmen.

Die vorliegende Erfindung richtet sich ferner auf ein Verfahren zum unterstützen Einparken eines Fahrzeugs, insbesondere eines Kraftfahrzeugs, in eine quer zum Fahrzeug angeordnete Parklücke mit wenigstens einer Sensoreinrichtung, durch die die Parklücke zumindest erkannt werden kann. Das Verfahren umfasst dabei wenigstens die Schritte des Erreichens einer von der Parklücke entfernten Ausgangsposition, insbesondere in einem Winkel von etwa 90 °, des vom Fahrer gelenkten Führens des Fahrzeugs zur Parklücke hin auf einer insbesondere kreissegmentartigen Bewegungsbahn, des Sensierens eines ersten der Parklücke zugewandten Eckbereichs eines ersten die Parklücke begrenzenden Hindernisses insbesondere durch Strahlen einer Sensoreinrichtung, der Berechnung einer Lage einer virtuellen Parklücke mit dem sensierten Eckbereich als begrenzender Teil der virtuellen Parklücke, Festlegen einer Soll-Einparkbewegungsbahn und unterstütztes Führen des Fahrzeugs entlang der Soll-Einparkbewegungsbahn in die Parklücke.

Unter "von der Parklücke entfernt" ist gemäß der Erfindung zu verstehen, dass das Fahrzeug weit genug von der Parklücke entfernt ist, um es sowohl mit einem einzigen Zug vorwärts in die Parklücke bewegen zu können als auch dabei einer Bewegungsbahn derart zu folgen, dass der erste Eckbereich mit vom Fahrzeug ausgesandten Strahlen überstrichen wird. Dazu ist im Wesentlichen zumindest ein Abstand einer Fahrzeugbreite erforderlich.

Dieses Verfahren hat insbesondere den Vorteil, dass das Fahrzeug vor dem eigentlichen Einparkvorgang nicht an der Parklücke zum Zwecke ihrer Vermessung vorbeibewegt werden muss und das Fahrzeug mit einem einzigen Zug in die Querparklücke geführt werden kann.

Weitere vorteilhafte Aus- und Weiterbildungen des Verfahrens ergeben sich auch aus der obigen Beschreibung der erfindungsgemäßen Vorrichtung.

Zusätzlich werden weitere vorteilhafte Aus- und Weiterbildungen der Erfindung im Folgenden anhand von Figuren mittels eines Ausführungsbeispiels beispielhaft erläutert. Dabei zeigt:
- Figur 1: eine schematische Draufsicht eines mit einer erfindungsgemäßen Vorrichtung ausgestatteten Kraftfahrzeugs in einer Parksituation, bei einer Ausgangsposition und einer Zwischenposition,
- Figur 2: eine schematische Draufsicht der Parksituation gemäß Figur 1, wobei das Fahrzeug in der Zwischenposition und einer Startposition unmittelbar vor dem unterstützen Einparken gezeigt ist, und
- Figur 3a: eine Messkurve des relativen Abstands eines ersten Eckbereichs eines ersten Hindernisses vom Fahrzeug, und
- Figur 3b: eine Darstellung des ersten Eckbereichs als Transformation der Messkurve von Fig. 3a in einen absoluten x-y-Raum in Verbindung mit einer festgelegten virtuellen Parklücke.

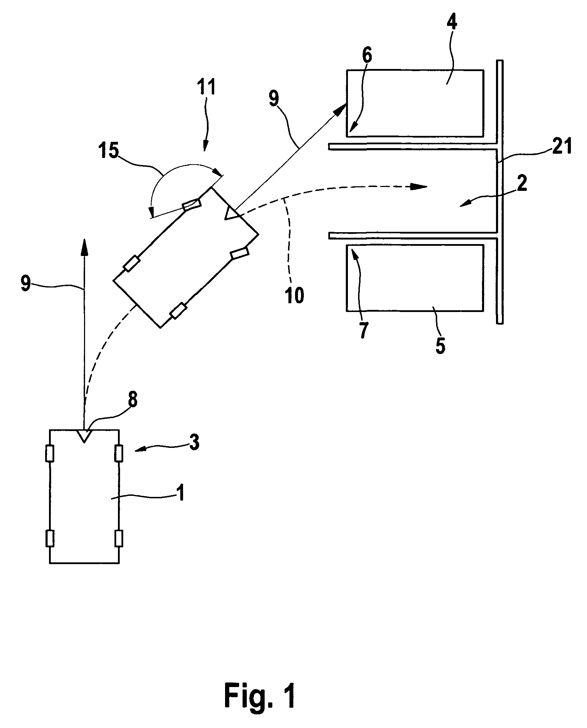

Figur 1 zeigt eine Parksituation, in der die erfindungsgemäße Vorrichtung zum unterstützen Einparken eines Fahrzeugs 1 zur Anwendung gebracht werden kann. Das Fahrzeug 1 befindet sich entfernt von einer Querparklücke 2 in einem Winkel von etwa 90° zu ihr ausgerichtet in einer Ausgangsposition 3. Die Querparklücke 2 ist durch ein erstes Fahrzeug als erstes Hindernis 4 und durch ein zweites Fahrzeug als zweites Hindernis 5 begrenzt. Die Hindernisse 4, 5 sind im Wesentlichen parallel zueinander angeordnet, wobei eine gewisse Verkippung der Hindernisse 4, 5 zueinander vorliegt (nicht dargestellt). Das erste Hindernis 4 befindet sich bezüglich der Parklücke 2 auf einer von dem einzuparkenden 1 Fahrzeug abgewandten Seite, das zweite Hindernis 5 befindet sich bezüglich der Parklücke 2 auf einer dem Fahrzeug 1 zugewandten Seite. In Querrichtung der Hindernisse 4, 5 der Parklücke 2 jeweils zugewandt und in Längsrichtung der Hindernisse 4, 5 dem Fahrzeug 1 jeweils zugewandt besitzt das erste Hindernis 4 einen ersten Eckbereich 6 und das zweite Hindernis 5 einen zweiten Eckbereich 7. Zwischen diesen beiden Eckbereichen 6, 7 hindurch soll das Fahrzeug 1 in die Parklücke 2 geführt werden.

Das Fahrzeug 1 besitzt an einer Vorderseite eine Sensoreinrichtung 8, die nach vorne Strahlungswellen 9 abstrahlt und reflektierte Wellen sensiert, so dass sie Hindernisse erkennen und ihre Lage und Ausrichtung bezüglich des Fahrzeugs 1 feststellen kann. In diesem Beispiel umfasst die Strahlung Radarwellen 9, die eine Messung über große Entfernungen ermöglicht. Es sind jedoch auch andere Strahlungsarten einsetzbar, sofern sie eine Reichweite besitzen, die groß genug ist, um aus einer Position des Fahrzeugs 1 vor dem eigentlichen Einparkvorgang eine Lage eines eine Parklücke begrenzenden Hindernisses zu bestimmen.

In dem Ausführungsbeispiel bewegt ein Fahrer des Fahrzeuges 1 ausgehend von der Ausgangsposition 3 ungeführt mittels Einschlag eines Lenkrads das Fahrzeug 1 in Vorwärtsrichtung auf einer kreissegmentartigen Bewegungsbahn 10 nach rechts zur Parklücke 2 hin. In der Ausgangsposition 3 startet der Fahrer die Vorrichtung, die zumindest vorläufig eine Ausrichtung der Parklücke 2 gegenüber dem Fahrzeug 1 von 90° annimmt. Während der Bewegung des Fahrzeugs 1 auf der Bewegungsbahn 10 sendet die Sensoreinrichtung 8 nach vorne gerichtete Radarstrahlen 9 aus. In der Ausgangsposition 3 treffen die Radarstrahlen 9 kein Hindernis, sondern gehen ins Leere. Mit fortschreitender Bewegung auf der Bewegungsbahn 10 sind die Radarstrahlen 9 immer weiter in Richtung der Parklücke 2 ausgerichtet, bis sie ab einem gewissen Punkt des Fahrzeugs 1 auf der Bewegungsbahn 10 auf das erste Hindernis 4 treffen. In Fig. 1 ist außer der Ausgangsposition 3 eine Zwischenposition 11 gezeigt, in der sich das Fahrzeug 1 bereits so weit auf der Bewegungsbahn 10 fortbewegt hat, dass der Radarstrahl 9 auf eine Stirnseite 12 des ersten Hindernisses 4 trifft.

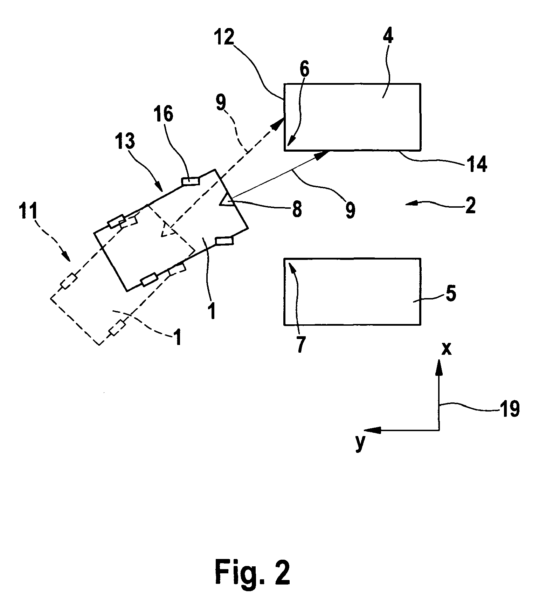

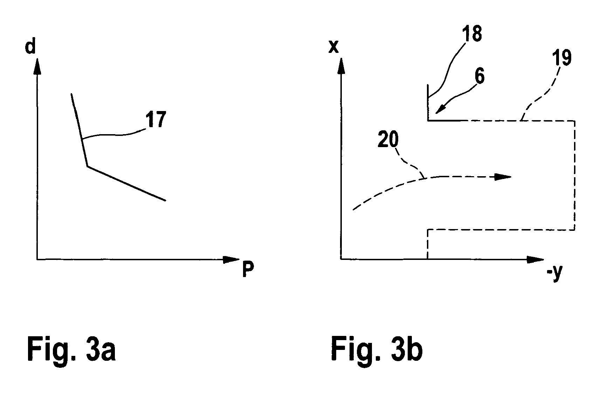

Figur 2 zeigt die Parksituation gemäß Figur 1, wobei das Fahrzeug 1 gegenüber der Zwischenposition 11, die in Fig. 2 gestrichelt dargestellt ist, durch den Fahrer bereits weiter auf der vom Fahrer frei gewählten Bewegungsbahn 10 zur Parklücke 2 hin bewegt worden ist. Die neue Position ist mit durchgezogenen Linien markiert und stellt eine Startposition 13 zum unterstützten Einparken dar, bei der der Fahrer das Fahrzeug 1 zunächst anhält. Zwischen der Zwischenposition 11 und der Startposition 13 hat der von der Sensoreinrichtung 8 ausgesandte Radarstrahl 9 von der Stirnseite 12 des ersten Hindernisses 4 bis zu einer Längsseite des ersten Hindernisses 4 im Wesentlichen den gesamten ersten Eckbereich 6 des ersten Hindernisses 4 überstrichen. Während des Überstreichens des ersten Eckbereichs 6 sammelt die Vorrichtung an einer Vielzahl von Punkten auf der Bewegungsbahn 10 jeweils Daten zum Abstand des Hindernisses vom Fahrzeug und zu Winkeln des Hindernisses bezüglich des Fahrzeugs. Gleichzeitig sammelt die Vorrichtung Daten zur Position des Fahrzeugs 1 und zur Ausrichtung des Fahrzeugs 1 bezogen auf die Ausgangsposition 3 des Fahrzeugs 1. Diese Daten werden in diesem Ausführungsbeispiel durch Radweg-Sensoren und den Lenkradwinkel bestimmt, der mit dem Einschlagwinkel 15 der Räder 16 korreliert. Die erfindungsgemäße Vorrichtung setzt Fahrzeugposition und -ausrichtung mit dem Abstand und Winkel des Hindernisses zum Fahrzeug in Bezug. Dies ist in Fig. 3a beispielhaft schematisch als Graph 17 eines Hindernisabstands d in Abhängigkeit von einer Fahrzeugposition P dargestellt.

Derartige relative Messkurven 17 werden von der erfindungsgemäßen Vorrichtung durch Korrelation der Daten in absolute Kurven 18 umgerechnet, die in einem absoluten x-y-Raum vorliegen. Ein x-y-Koordinatensystem 19 ist in diesem Ausführungsbeispiel, wie in Fig. 2 dargestellt, so aufgespannt, dass die x-Richtung der Längsrichtung des Fahrzeugs 1 in der Ausgangsposition 3 entspricht und die y-Richtung der Längsrichtung der Parklücke zum Fahrzeug hin.

In Fig. 3b) ist die relative Kurve 17 aus Fig. 3a) in einen x-y-Raum transformiert als absolute Kurve 18 dargestellt. Der so bestimmte erste Eckbereich 6 ist schematisch mit einer durchgezogenen Linie dargestellt. Eine äußerste Eckposition des Eckbereichs 6 ist beispielsweise durch den geringsten x-Wert der absoluten Kurve 18 als solche erkennbar.

Mit Erreichen der Startposition 13 liegt der Vorrichtung somit eine genaue Position des ersten Eckbereichs 6 vor. Weitere geometrische Informationen über die Parklücke, wie ihre Breite und Länge, werden von der Vorrichtung mit 2,50 m bzw. 4,50 m angenommen.

Somit ergibt sich zusammen mit dem ersten Eckbereich 6, dessen Lage absolut im x-y-Raum bestimmt ist, eine festgelegte virtuelle Parklücke 19, deren Lage im x-y-Raum in Fig. 3b) gestrichelt dargestellt ist.

Aufgrund der so bestimmten Lage und Abmessung der virtuellen Parklücke 19 berechnet die Vorrichtung zum unterstützten Einparken ausgehend von der Startposition 3 eine Soll-Einparkbewegungsbahn 20 für das vorwärts ausgerichtete Fahrzeug.

Entlang dieser Soll-Einparkbewegungsbahn 20 wird das Fahrzeug 1 durch die Vorrichtung in die Parklücke 2 geführt. Dabei wird die Lenkung von der Vorrichtung selbst über ein EPS-System (electric power steering) durchgeführt. Der Fahrer muss lediglich Gas geben und bremsen. Alternativ wird über eine Anzeige oder über Stimmbefehle der Fahrer angeleitet, wie er das Lenkrad einzuschlagen hat, um der Soll-Einparkbewegungsbahn 20 zu folgen.

Während des geführten Einparkvorgangs sendet die Sensoreinrichtung 2 weiterhin Radarstrahlen 9 aus und vermisst so die tatsächliche Ausmessung und Lage der Parklücke 2. Insbesondere schwenkt der Radarstrahl 9 weiter über die Längsseite 14 des ersten Hindernisses 4. Somit wird mit fortschreitender Tiefe der Parklücke 2 ständig der tatsächliche Abstand des Fahrzeugs 1 vom ersten Hindernis 4 bestimmt. Zusätzlich wird mittels zweier Sensoren eines Einparkhilfesystems, die sich seitlich am Fahrzeug rechts vorne und hinten befinden (nicht dargestellt), während des geführten Einparkens durch Aussenden von Ultraschall der Abstand des Fahrzeugs 1 zum zweiten Hindernis 5 ständig vermessen.

Die erhaltenen zusätzlichen Daten werden wiederum wie oben bereits für den ersten Eckbereich 6 beschrieben in den absoluten x-y-Raum eingefügt und die tatsächliche Ausrichtung und Breite der gesamten Parklücke, die ursprünglich mit 90° und 2,50 m angenommen wurde, sowie die Lage des zweiten Eckbereichs 7 berechnet. Entsprechend korrigiert die Vorrichtung die Soll-Einparkbewegungsbahn, falls die tatsächliche Breite, Lage und Ausrichtung der Parklücke 2 nicht mit denen der virtuellen Parklücke 19 übereinstimmen.

Selbstverständlich kann der Fahrer das Fahrzeug 1 auch ohne assistierende Einparkvorrichtung durch einen selbst ausgeführten Vorwärtszug in die Parklücke 2 bewegen.

Obige Beschreibung und Ausführungsbeispiele, sowie die Figuren dienen der Erläuterung der Erfindung und sind nicht als beschränkend anzusehen. Insbesondere ist es für die Erfindung unerheblich, in welcher Ausrichtung der x-y-Raum aufgespannt ist. Wesentlich ist nur, dass aus relativen Bezügen Positionen und Winkel in einem absoluten Raum geschaffen werden.

Selbstverständlich kann ein Fahrzeug mit einer erfindungsgemäßen Vorrichtung auch nach links in eine Querparklücke geführt werden.

## Patentansprüche

1. Vorrichtung zum unterstützten Einparken eines Fahrzeugs (1), insbesondere eines Kraftfahrzeugs, in eine quer zum Fahrzeug (1) vorhandene Parklücke (2), mit wenigstens einer Sensoreinrichtung (8), die zumindest zur Erkennung der Parklücke (2) ausgebildet ist, wobei die Sensoreinrichtung (8) nach vorne gerichtet ist und die Vorrichtung so ausgebildet ist, dass zur Erkennung der Parklücke (2) eine Sensierung lediglich eines ersten Eckbereichs (6) eines ersten die Parklücke (2) begrenzenden Hindernisses (4) durch die Sensoreinrichtung (8) erforderlich ist.

2. Vorrichtung nach Anspruch 1, **dadurch gekennzeichnet, dass** die Vorrichtung ausgebildet ist, eine Breite der Parklücke als gegeben anzunehmen und aufgrund des sensierten Eckbereichs (6) und der angenommenen Breite eine Soll-Einparkbewegungsbahn (20) festzulegen.

3. Vorrichtung nach Anspruch 2, **dadurch gekennzeichnet, dass** die Vorrichtung dazu ausgebildet ist, die Soll-Einparkbewegungsbahn (20) aufgrund weiterer Messungen neu zu berechnen.

4. Vorrichtung nach einem oder mehreren der vorhergehenden Ansprüche, **dadurch gekennzeichnet, dass** die Vorrichtung zumindest eine weitere Sensoreinrichtung (8) aufweist, die so ausgebildet ist, dass sie einen seitlichen Abstand des Fahrzeugs (1) zu einem Hindernis (4, 5) vermessen kann.

5. Vorrichtung nach einem oder mehreren der vorhergehenden Ansprüche, **dadurch gekennzeichnet, dass** die Vorrichtung zumindest ein Führungsmittel aufweist, mittels dem das Fahrzeug (1) entlang der Soll-Einparkbewegungsbahn (20) in die Parklücke (2) geführt werden kann.

6. Vorrichtung nach einem oder mehreren der vorhergehenden Ansprüche, **dadurch gekennzeichnet dass** die Vorrichtung eine Transformationseinrichtung aufweist, die geeignet ist, relative Distanzwerte und/oder Winkelmesswerte der Hindernisse (4, 5) bezogen auf das Fahrzeug in einen absoluten x-y-Raum zu transformieren.

7. Verfahren zum unterstützten Einparken eines Fahrzeugs, insbesondere eines Kraftfahrzeugs, in eine quer zum Fahrzeug liegende Parklücke, insbesondere mit einer Vorrichtung gemäß einem oder mehreren der Ansprüche 1 bis 6, mit den Schritten
- Erreichen einer von der der Parklücke entfernten Ausgangsposition in einem geschätzten Winkel zur Parklücke von insbesondere 90°,
- Bewegen des Fahrzeugs zur Parklücke hin auf einer insbesondere kreissegmentartigen Bewegungsbahn,
- Sensieren eines ersten der Parklücke zugewandten Eckbereichs eines ersten die Parklücke begrenzenden Hindernisses,
- Berechnen einer Lage einer virtuellen Parklücke mit dem sensierten Eckbereich als begrenzendem Teil der virtuellen Parklücke,
- Festlegen einer Soll-Einparkbewegungsbahn und
- unterstütztes Führen des Fahrzeugs entlang der Soll-Einparkbewegungsbahn in die Parklücke.

8. Verfahren nach Anspruch 7, **dadurch gekennzeichnet, dass** während des unterstützen Führens in die Parklücke ein zweites die Parklücke begrenzendes Hindernis sensiert wird, die tatsächliche Lage und/oder die Abmessungen der Parklücke berechnet werden und die Soll-Einparkbewegungsbahn neu berechnet wird.

9. Verfahren nach Anspruch 7 oder 8, **dadurch gekennzeichnet, dass** die Lage und/oder Abmessung der Parklücke durch Transformieren von relativen Abstands- und/oder Winkelmessungen bezogen auf die Position und/oder Ausrichtung des Fahrzeugs in einen absoluten x-y-Raum berechnet wird.

## Claims

1. Apparatus for the assisted parking of a vehicle (1), in particular a motor vehicle, in a parking space (2) transverse to the vehicle (1), having at least one sensor device (8) which is designed at least to detect the parking space (2), the sensor device (8) being directed forwards, and the apparatus being designed in such a manner that, in order to detect the parking space (2), it is necessary for the sensor device (8) to sense only a first corner area (6) of a first obstacle (4) bounding the parking space (2).

2. Apparatus according to Claim 1, **characterized in that** the apparatus is designed to assume a width of the parking space as given and to determine a desired parking movement path (20) on the basis of the sensed corner area (6) and the assumed width.

3. Apparatus according to Claim 2, **characterized in that** the apparatus is designed to recalculate the desired parking movement path (20) on the basis of further measurements.

4. Apparatus according to one or more of the preceding claims, **characterized in that** the apparatus has at least one further sensor device (8) which is designed in such a manner that it can measure a lateral distance between the vehicle (1) and an obstacle (4, 5).

5. Apparatus according to one or more of the preceding claims, **characterized in that** the apparatus has at least one guide means which can be used to guide the vehicle (1) into the parking space (2) along the desired parking movement path (20).

6. Apparatus according to one or more of the preceding claims, **characterized in that** the apparatus has a transformation device which is suitable for transforming relative distance values and/or angle measured values of the obstacles (4, 5) into an absolute x-y space on the basis of the vehicle.

7. Method for the assisted parking of a vehicle, in particular a motor vehicle, in a parking space transverse to the vehicle, in particular using an apparatus according to one or more of Claims 1 to 6, having the steps of
- reaching a starting position away from the parking space at an estimated angle of, in particular, 90° with respect to the parking space,
- moving the vehicle towards the parking space on a movement path, in particular in the form of a circle segment,
- sensing a first corner area of a first obstacle bounding the parking space, which corner area faces the parking space,
- calculating a position of a virtual parking space with the sensed corner area as the bounding part of the virtual parking space,
- determining a desired parking movement path, and
- assisted guiding of the vehicle into the parking space along the desired parking movement path.

8. Method according to Claim 7, **characterized in that**, during the assisted guiding into the parking space, a second obstacle bounding the parking space is sensed, the actual position and/or the dimensions of the parking space is/are calculated and the desired parking movement path is recalculated.

9. Method according to Claim 7 or 8, **characterized in that** the position and/or dimension of the parking space is/are calculated by transforming relative distance and/or angle measurements into an absolute x-y space on the basis of the position and/or orientation of the vehicle.

## Revendications

1. Dispositif d'aide au stationnement d'un véhicule (1), notamment d'un véhicule automobile, dans une place de stationnement (2) transversale par rapport au véhicule (1), avec au moins un dispositif de détection (8) conçu au moins pour identifier la place de stationnement (2), le dispositif de détection (8) étant orienté vers l'avant et le dispositif étant réalisé de telle sorte qu'une détection d'une première zone de coin (6) d'un premier obstacle (4) délimitant la place de stationnement (2) suffit pour identifier la place de stationnement (2) à l'aide du dispositif de détection (8).

2. Dispositif selon la revendication 1, **caractérisé en ce que** le dispositif est conçu pour effectuer une supposition sur la largeur de la place de stationnement existante et pour déterminer la trajectoire du mouvement de stationnement théorique (20) sur la base de la zone de coin (6) détectée et de la largeur supposée.

3. Dispositif selon la revendication 2, **caractérisé en ce que** le dispositif est conçu pour recalculer la trajectoire du mouvement de stationnement théorique (20) sur la base de mesures supplémentaires.

4. Dispositif selon l'une quelconque des revendications précédentes ou plusieurs d'entre elles, **caractérisé en ce que** le dispositif comporte au moins un dispositif de détection (8) supplémentaire conçu pour pouvoir mesurer une distance latérale du véhicule (1) par rapport à un obstacle (4, 5).

5. Dispositif selon l'une quelconque des revendications précédentes ou plusieurs d'entre elles, **caractérisé en ce que** le dispositif comporte au moins un moyen de guidage à l'aide duquel le véhicule (1) peut être guidé dans la place de stationnement (2), le long de la trajectoire de déplacement de stationnement théorique (20).

6. Dispositif selon l'une quelconque des revendications précédentes ou plusieurs d'entre elles, **caractérisé en ce que** le dispositif comporte un dispositif de transformation adapté pour transformer en espace x-y absolu les valeurs de distance et/ou les valeurs de mesure d'angle relatives des obstacles (4, 5) par rapport au véhicule.

7. Procédé d'aide au stationnement d'un véhicule, notamment d'un véhicule automobile, dans une place de stationnement transversale par rapport au véhicule, notamment avec un dispositif selon l'une quelconque des revendications 1 à 6 ou plusieurs d'entre elles, avec les étapes suivantes :
- arrivée à une position de sortie éloignée de la place de stationnement à un angle estimé, de 90° notamment, par rapport à la place de stationnement ;
- déplacement du véhicule en direction de la place de stationnement en suivant notamment une trajectoire de déplacement de type en segment de cercle ;
- détection d'une première zone de coin orientée vers la place de stationnement appartenant à un premier obstacle délimitant la place de stationnement ;
- calcul d'une position d'une place de stationnement virtuelle à l'aide de la zone de coin détectée comme partie délimitant la place de stationnement virtuelle ;
- détermination d'une trajectoire de déplacement de stationnement théorique ; et
- guidage assisté du véhicule dans la place de stationnement, le long de la trajectoire de déplacement de stationnement théorique.

8. Procédé selon la revendication 7, **caractérisé en ce que** pendant le guidage assisté dans la place de stationnement, un deuxième obstacle délimitant la place de stationnement est détecté, que la position et/ou les dimensions réelles de la place de stationnement sont calculées et que la trajectoire de déplacement de stationnement théorique est recalculée.

9. Procédé selon la revendication 7 ou 8, **caractérisé en ce que** la position et/ou la dimension de la place de stationnement est calculée par transformation en un espace x-y absolu des mesures de distance et/ou d'angle relatives à la position et/ou à l'orientation du véhicule.
